# DEMANDE DE BREVET EUROPEEN

(11) **EP 3 450 193 A1**
(43) Date de publication de la demande: **06.03.2019**
(21) Numéro de dépôt: 18190760.1
(22) Date de dépôt: 24.08.2018
(51) Int. Cl.: B41M 5/00, B41M 7/00, B44C 5/04, B32B 17/10, E06B 3/66, B44F 1/06, C03C 17/00

(54) **PROCEDE D'OBTENTION D'UNE FEUILLE DE VERRE REVETUE DE MOTIFS FORMANT DECOR**

(30) Priorité: 31.08.2017 FR 1758040
(71) Demandeur: Saint-Gobain Glass France, 92400 Courbevoie (FR)
(72) Inventeur: CHAHBOUNE, Kamel, 02200 Soissons (FR)
(74) Mandataire: Saint-Gobain Recherche

(57) **Abrégé**

L'invention a pour objet un procédé d'obtention d'un matériau comprenant une feuille de verre revêtue sur une de ses faces d'un ensemble de motifs formant décor, ledit procédé comprenant les étapes suivantes :
d) une première étape de dépôt par impression numérique, sur ladite face, d'un ensemble de motifs inférieurs puis
e) une seconde étape de dépôt par impression numérique, sur lesdits motifs inférieurs, d'un ensemble de motifs supérieurs, puis
f) une étape de traitement thermique à une température d'au moins 500°C,
ledit procédé étant caractérisé en ce qu'un ensemble de motifs choisi parmi l'ensemble de motifs inférieurs et l'ensemble de motifs supérieurs est constitué d'une première encre inorganique comprenant au moins un pigment mais ne comprenant pas de fritte de verre, l'autre ensemble de motifs étant constitué d'une deuxième encre inorganique comprenant au moins un pigment et une fritte de verre, ledit procédé étant en outre caractérisé en ce qu'après l'étape c) est réalisée une étape d) d'élimination de la première encre inorganique non fixée lors de l'étape de traitement thermique, les motifs constitués de ladite première encre étant avant ladite étape d) de dimensions latérales supérieures à celles des motifs constitués de ladite deuxième encre.

## Description

L'invention se rapporte au domaine des vitrages décoratifs. On connaît des procédés comprenant le dépôt par impression numérique, sur une face de feuilles de verre, de motifs superposés formant décor, de sorte que l'impression visuelle du vitrage obtenu diffère selon le côté duquel on le regarde. Par exemple, un premier ensemble de motifs inférieurs, typiquement de couleur noire, est déposé sur la feuille de verre, puis, dans un deuxième passage, un deuxième ensemble de motifs supérieurs de teintes diverses et formant un décor est déposé sur le premier ensemble de motifs, de manière superposée. Le décor est visible du côté où les motifs ont été déposés, mais pas de l'autre côté.

Les techniques d'impression numérique comprennent par exemple des techniques du type jet d'encre dans lesquels des gouttelettes d'encre sont déposées sur la feuille de verre. L'encre traditionnellement utilisée est une encre inorganique, qui contient des matières inorganiques telles qu'au moins un pigment et au moins une fritte de verre. L'encre ainsi déposée est cuite lors d'un traitement thermique à au moins 500°C de manière à la fixer définitivement à la feuille de verre.

Le positionnement des têtes d'impression ou de la feuille de verre doit être parfaitement maîtrisé lors du deuxième passage afin que les motifs inférieurs et supérieurs soient parfaitement superposés. Des erreurs de positionnement ne sont toutefois pas évitables, si bien qu'en pratique, afin de pallier à ces erreurs, les dimensions latérales des motifs supérieurs doivent être choisies très légèrement inférieures à celles des motifs inférieurs, typiquement avec une différence de l'ordre de 3 pixels. Le rendu n'est donc pas parfait, le décor pouvant être perçu dans certaines conditions d'illumination du côté où il ne devrait pas être visible.

L'invention a pour but d'obvier à ces inconvénients liés à l'utilisation de techniques d'impression numérique.

A cet effet, l'invention a pour objet un procédé d'obtention d'un matériau comprenant une feuille de verre revêtue sur une de ses faces d'un ensemble de motifs formant décor, ledit procédé comprenant les étapes suivantes :
a) une première étape de dépôt par impression numérique, sur ladite face, d'un ensemble de motifs inférieurs puis
b) une seconde étape de dépôt par impression numérique, sur lesdits motifs inférieurs, d'un ensemble de motifs supérieurs, puis
c) une étape de traitement thermique à une température d'au moins 500°C,
ledit procédé étant caractérisé en ce qu'un ensemble de motifs choisi parmi l'ensemble de motifs inférieurs et l'ensemble de motifs supérieurs est constitué d'une première encre inorganique comprenant au moins un pigment mais ne comprenant pas de fritte de verre, l'autre ensemble de motifs étant constitué d'une deuxième encre inorganique comprenant au moins un pigment et une fritte de verre, ledit procédé étant en outre caractérisé en ce qu'après l'étape c) est réalisée une étape d) d'élimination de la première encre inorganique non fixée lors de l'étape de traitement thermique, les motifs constitués de ladite première encre étant avant ladite étape d) de dimensions latérales supérieures à celle des motifs constitués de ladite deuxième encre.

On entend par motif un revêtement présentant des dimensions latérales très inférieures à celles du substrat. Le motif (final) formant décor est ici formé de la superposition, dans la direction de la normale à la feuille de verre, d'un motif inférieur et d'un motif supérieur. On entend par motif « inférieur » un motif situé plus proche de la feuille de verre que le motif « supérieur ». Le motif inférieur est de préférence en contact direct avec la feuille de verre. Le motif supérieur est de préférence en contact direct avec le motif inférieur.

Les motifs peuvent être de tailles et de forme diverses. Les motifs présentent de préférence tous la même forme. Les motifs inférieurs présentent avantageusement tous la même forme. Les motifs supérieurs présentent avantageusement tous la même forme. Les motifs inférieurs et/ou supérieurs peuvent aussi présenter des formes différentes entre elles. Les motifs sont typiquement circulaires, avec un diamètre de préférence compris entre 0,5 et 10 mm. Les motifs inférieurs et/ou supérieurs peuvent aussi être, à titre d'exemples, de forme carrée, triangulaire ou linéaire.

L'opacité et la brillance des motifs seront d'autant plus grandes que les motifs sont épais. L'épaisseur des motifs (inférieurs et/ou supérieurs) est de préférence comprise dans un domaine allant de 10 à 100 µm, notamment de 20 à 80 µm, à l'état humide, donc avant séchage. Après cuisson, les motifs finaux ont typiquement une épaisseur comprise dans un domaine allant de 2 à 20 µm.

La feuille de verre peut être de toute forme et de toute dimension. Elle est typiquement rectangulaire, avec une diagonale pouvant être supérieure à 1 m, voire à 2 m. L'épaisseur de la feuille de verre est de préférence comprise entre 1 et 19 mm, notamment entre 2 et 10 mm. Le verre est de préférence un verre silico-sodocalcique, mais d'autres types de verre peuvent être utilisés, comme par exemple des verres aluminosilicates ou borosilicates. La feuille de verre est de préférence obtenue par flottage.

L'ensemble des motifs finaux (formés de la superposition des motifs inférieurs et supérieurs) occupe de préférence 10 à 90% de la surface de la feuille de verre, notamment de 20 à 85%, voire de 30 à 80%. Dans le matériau final, le nombre de motifs finaux est de préférence d'au moins 20, notamment 50 et même 100.

On entend par « encre inorganique » au sens de l'invention une encre à base de matières inorganiques, en particulier des pigments, et, dans le cas de la deuxième encre, au moins une fritte de verre. Les encres inorganiques comprennent également de préférence un médium organique destiné à lier temporairement les constituants de l'encre avant d'être éliminé lors de l'étape c).

La fritte de verre de la deuxième encre est typiquement à base d'oxydes, notamment d'oxyde de bismuth. Il peut s'agir par exemple de borosilicates de bismuth. De telles frittes présentent une bonne résistance chimique ainsi qu'une excellente brillance. Outre l'oxyde de bismuth, la fritte de verre peut comprendre d'autres oxydes, tels que les oxydes de bore, de silicium, de zinc, d'alcalins (lithium, sodium, potassium), de titane, d'aluminium etc... La fritte de verre est de préférence exempte de plomb.

Les pigments utilisés dans la première et la deuxième encre sont par exemple des oxydes ou sulfures d'au moins un métal de transition, notamment choisi parmi le fer, le chrome, le cobalt, le manganèse, le titane, le cuivre, le nickel.

Les particules de fritte de verre et de pigment ont de préférence une taille d'au plus 2 µm, notamment 1 µm, afin d'obtenir une résolution particulièrement élevée et d'être compatibles avec les têtes d'impression. Par le terme « taille » on entend le D90 (distribution volumique). Cette taille est déterminée par diffraction laser.

Le médium organique est de préférence un solvant, tel qu'un alcool.

L'encre inorganique peut également comprendre d'autres additifs, tels que des agents dispersants, des agents de rhéologie, des surfactants, des agents démoussants etc...

La deuxième encre inorganique comprend typiquement (en poids) 15 à 65% de fritte de verre, 2 à 25% de pigment, 15 à 70% de solvant, et jusqu'à 15% d'additifs.

Selon un mode de réalisation de l'invention, un décor n'est visible que d'un côté du matériau. Dans ce cas, le décor est de préférence formé par les motifs constitués de la deuxième encre. Les motifs constitués de la première encre sont alors de préférence tous de la même couleur, de préférence d'une couleur sombre telle que le noir, le brun ou le gris. Le pigment de la deuxième encre peut quant à lui être de diverses couleurs, plutôt des couleurs claires afin d'accentuer le contraste entre la vision des deux côtés. Le décor peut être monochrome, par exemple en blanc, ou polychrome. La face du matériau du côté duquel le décor est visible sera de préférence disposée à l'extérieur du bâtiment, où la luminosité est plus grande.

Selon un autre mode de réalisation de l'invention, un premier décor est visible d'un côté du matériau et un deuxième décor est visible de l'autre côté du matériau. Ainsi, du côté où les motifs sont déposés, un premier décor est formé par les motifs supérieurs, et du côté opposé, un deuxième décor, différent du premier, est formé par les motifs inférieurs. Ici encore, chacun de ces décors peut être de manière indépendante monochrome ou polychrome. Un tel matériau peut par exemple former une cloison.

Le terme « pigment » peut couvrir des mélanges de pigments destinés à atteindre une couleur donnée.

La deuxième encre inorganique comprend au moins un pigment et une fritte de verre. La fritte de verre est composée de particules d'un verre destiné à ramollir durant l'étape c) de traitement thermique. C'est donc la fritte de verre de la deuxième encre qui va fixer le pigment de la deuxième encre sur la feuille de verre. La fritte va également servir à fixer le pigment de la première encre dans les zones où les motifs inférieurs et supérieurs sont superposés. En revanche, dans la zone où les motifs inférieurs et supérieurs ne sont pas superposés, la première encre n'est pas fixée, si bien qu'elle peut être éliminée lors de l'étape d). Il est ainsi possible, grâce au procédé selon l'invention, d'obtenir une parfaite superposition des motifs inférieurs et supérieurs par impression numérique, de sorte que le décor est visible d'un côté du vitrage et totalement invisible de l'autre côté.

Avant l'étape d), les motifs constitués de la première encre sont de dimensions latérales supérieures à celles des motifs constitués de la deuxième encre. On entend par dimensions latérales les dimensions dans le plan de la feuille de verre. Par exemple, dans le cas de motifs circulaires, le diamètre des motifs constitués de la première encre est plus grand que le diamètre des motifs constitués de la deuxième encre. De préférence, les dimensions latérales des motifs constitués de la première encre sont au moins 1%, notamment 2% ou 3% supérieures aux dimensions latérales des motifs constitués de la deuxième encre. Avantageusement, les dimensions latérales des motifs constitués de la première encre sont au plus 20%, notamment 15% et même 10% supérieures aux dimensions latérales des motifs constitués de la deuxième encre, afin d'économiser la matière et faciliter l'étape d). Après l'étape d), les deux motifs ont des dimensions latérales identiques, car la partie de la première encre n'étant pas en superposition avec la deuxième encre n'est pas fixée par la fritte de verre de la deuxième encre, et est donc éliminée lors de l'étape d).

Selon un premier mode de réalisation, les motifs inférieurs sont constitués de la première encre et les motifs supérieurs sont constitués de la deuxième encre. Dans ce cas, les motifs inférieurs présentent avant l'étape d) des dimensions latérales supérieures à celles des motifs supérieurs. Selon un exemple, le motif inférieur présente une teinte sombre, par exemple noire, et le motif supérieur une ou plusieurs teintes, généralement claires, de manière à former un décor monochrome ou polychrome visible du côté où les motifs ont été déposés.

Selon un deuxième mode de réalisation, les motifs inférieurs sont constitués de la deuxième encre et les motifs supérieurs sont constitués de la première encre. Dans ce cas, les motifs supérieurs présentent avant l'étape d) des dimensions latérales supérieures à celles des motifs inférieurs. Les motifs supérieurs vont donc recouvrir totalement les motifs inférieurs y compris sur leurs parties latérales, et peuvent être en contact avec la feuille de verre.

Le dépôt par impression numérique est de préférence réalisé par des techniques du type jet d'encre. La feuille de verre est typiquement posée sur un support au-dessus duquel une tête d'impression reliée à une réserve d'encre est commandée numériquement, donc au moyen d'un ordinateur, pour se déplacer et déposer des gouttelettes d'encre à des positions déterminées. Ces techniques connues sont notamment décrites dans la demande WO 2005/018941. Des types d'encre utilisables sont notamment décrits dans les demandes WO 2005/19360 et WO 2016/110724.

De préférence, une étape de séchage a lieu entre les étapes a) et b), et/ou entre les étapes b) et c). Le séchage est de préférence réalisé au moyen de dispositifs de séchage disposés sur la tête d'impression et/ou en aval de la machine d'impression numérique. Dans ce dernier cas, il peut par exemple s'agir d'un dispositif de séchage émettant un rayonnement infrarouge. Le séchage met en oeuvre des températures de préférence d'au moins 70°C, notamment 80°C, pendant quelques minutes.

Le traitement thermique de l'étape c) permet de porter la feuille de verre à une température d'au moins 500°C, de préférence 550°C et même 600°C, mais généralement d'au plus 700°C. L'étape c) peut être un traitement de trempe thermique, éventuellement associé à un traitement de bombage. Pour ce faire, on porte de manière connue la feuille de verre à une température d'au moins 600°C puis on la refroidit rapidement au moyen de buses de soufflage. On renforce ainsi la surface du verre, la feuille de verre devenant plus difficile à briser, et, en cas de bris, se fragmentant en une multitude de fragments non coupants.

Lors de l'étape d), l'élimination de la première encre inorganique non fixée lors de l'étape de traitement thermique se fait de préférence par lavage, notamment avec de l'eau (jet d'eau, éventuellement sous pression), éventuellement associé à une sollicitation mécanique, par exemple à l'aide de brosses. Le lavage peut être aussi réalisé dans une machine à laver, horizontale ou verticale. Les pigments retirés par cette étape peuvent être retraités et réutilisés.

Le matériau obtenu par le procédé selon l'invention peut ensuite subir divers traitements destinés à en faire un vitrage, ou peut être incorporé à un vitrage. Il peut notamment s'agir d'étapes dans lesquelles le matériau est fixé à au moins une autre feuille de verre au moyen d'un intercalaire en matière thermoplastique, telle que du polyvinylbutyral (PVB), pour en faire un vitrage feuilleté.

L'invention a également pour objet un matériau susceptible d'être obtenu par le procédé selon l'invention, et un vitrage comprenant un tel matériau.

Un tel vitrage peut être aussi bien utilisé dans les bâtiments que dans des moyens de transport, terrestre, ferroviaire, maritime ou aérien. Il peut s'agir par exemple d'un vitrage multiple, par exemple double ou triple, dans lequel au moins un matériau selon l'invention est fixé à distance d'une autre feuille de verre au moyen d'un cadre espaceur, ou encore d'un vitrage feuilleté, dans lequel au moins un matériau selon l'invention est fixé à une autre feuille de verre au moyen d'un intercalaire en matière thermoplastique, telle que du polyvinylbutyral (PVB).

## Revendications

1. Procédé d'obtention d'un matériau comprenant une feuille de verre revêtue sur une de ses faces d'un ensemble de motifs formant décor, ledit procédé comprenant les étapes suivantes :
a) une première étape de dépôt par impression numérique, sur ladite face, d'un ensemble de motifs inférieurs puis
b) une seconde étape de dépôt par impression numérique, sur lesdits motifs inférieurs, d'un ensemble de motifs supérieurs, puis
c) une étape de traitement thermique à une température d'au moins 500°C,
ledit procédé étant **caractérisé en ce qu'**un ensemble de motifs choisi parmi l'ensemble de motifs inférieurs et l'ensemble de motifs supérieurs est constitué d'une première encre inorganique comprenant au moins un pigment mais ne comprenant pas de fritte de verre, l'autre ensemble de motifs étant constitué d'une deuxième encre inorganique comprenant au moins un pigment et une fritte de verre, ledit procédé étant en outre **caractérisé en ce qu'**après l'étape c) est réalisée une étape d) d'élimination de la première encre inorganique non fixée lors de l'étape de traitement thermique, les motifs constitués de ladite première encre étant avant ladite étape d) de dimensions latérales supérieures à celles des motifs constitués de ladite deuxième encre.

2. Procédé selon la revendication 1, tel que les motifs sont circulaires ou de forme carrée, triangulaire ou linéaire.

3. Procédé selon l'une des revendications précédentes, tel qu'avant l'étape d) les dimensions latérales des motifs constitués de la première encre sont au moins 1%, notamment 2% ou 3% supérieures aux dimensions latérales des motifs constitués de la deuxième encre.

4. Procédé selon l'une des revendications précédentes, tel qu'avant l'étape d) les dimensions latérales des motifs constitués de la première encre sont au plus 20%, notamment 15% et même 10% supérieures aux dimensions latérales des motifs constitués de la deuxième encre.

5. Procédé selon l'une des revendications précédentes, dans lequel les motifs inférieurs sont constitués de la première encre et les motifs supérieurs sont constitués de la deuxième encre.

6. Procédé selon l'une des revendications 1 à 4, dans lequel les motifs inférieurs sont constitués de la deuxième encre et les motifs supérieurs sont constitués de la première encre.

7. Procédé selon l'une des revendications précédentes, dans lequel une étape de séchage a lieu entre les étapes a) et b), et/ou entre les étapes b) et c).

8. Procédé selon l'une des revendications précédentes, dans lequel l'étape c) est un traitement de trempe thermique, éventuellement associé à un traitement de bombage.

9. Matériau susceptible d'être obtenu par le procédé de l'une quelconque des revendications précédentes.

10. Vitrage comprenant un matériau selon la revendication précédente.
